# EUROPEAN PATENT SPECIFICATION

(11) **EP 4 390 778 B1**
(45) Date of publication and mention of the grant of the patent: **16.09.2026**
(21) Application number: 21954234.7
(22) Date of filing: 19.08.2021
(51) Int. Cl.: G06N 10/20, G06N 10/60

(54) **INFORMATION PROCESSING DEVICE, QUANTUM CIRCUIT GENERATION METHOD, AND QUANTUM CIRCUIT GENERATION PROGRAM**
INFORMATIONSVERARBEITUNGSVORRICHTUNG, QUANTENSCHALTUNGERZEUGUNGSVERFAHREN UND QUANTENSCHALTUNGERZEUGUNGSPROGRAMM
DISPOSITIF DE TRAITEMENT D'INFORMATIONS, PROCÉDÉ DE GÉNÉRATION DE CIRCUITS QUANTIQUES, ET PROGRAMME DE GÉNÉRATION DE CIRCUITS QUANTIQUES

(43) Date of publication of application: 26.06.2024
(73) Proprietor: FUJITSU LIMITED, Kawasaki-shi, Kanagawa 211-8588 (JP)
(72) Inventor: MORITA, Mikio, Kawasaki-shi, Kanagawa 211-8588 (JP)
(74) Representative: Haseltine Lake Kempner LLP
(86) International application number: PCT/JP2021/030458
(87) International publication number: WO 2023/021666

(56) References cited:
- JP-A- 2006 195 587
- JP-A- 2020 144 400
- JP-A- 2020 201 566
- PRANAV GOKHALE ET AL: "Minimizing State Preparations in Variational Quantum Eigensolver by Partitioning into Commuting Families", ARXIV.ORG, CORNELL UNIVERSITY LIBRARY, 201 OLIN LIBRARY CORNELL UNIVERSITY ITHACA, NY 14853, 31 July 2019 (2019-07-31), XP081452908
- EWOUT VAN DEN BERG ET AL: "Circuit optimization of Hamiltonian simulation by simultaneous diagonalization of Pauli clusters", ARXIV.ORG, CORNELL UNIVERSITY LIBRARY, 201 OLIN LIBRARY CORNELL UNIVERSITY ITHACA, NY 14853, 6 September 2020 (2020-09-06), XP081756940
- A KISSINGER ET AL: "CNOT circuit extraction for topologically-constrained quantum memories", ARXIV:1904.00633V2, 29 May 2019 (2019-05-29), XP055758286, Retrieved from the Internet <URL:https://arxiv.org/abs/1904.00633v2> [retrieved on 20201209]

## Description

### Technical Field

The embodiments discussed herein are related to an information processing apparatus, a quantum circuit generation method, and a quantum circuit generation program.

### Background Art

One application of quantum computers is a quantum chemical calculation called Variational Quantum Eigensolver (VQE). A quantum chemical calculation is a molecular simulation that estimates molecular states based on the Schrödinger equation. VQE calculates optimal eigenvalues for molecular states based on variational principles and quantum mechanics.

VQE reproduces a specific quantum state using a plurality of quantum bits (hereinafter, simply "qubits") included in a quantum device. VQE performs gate operations corresponding to specific projection operators on a plurality of qubits to obtain measurement values, such as energy in a quantum state. VQE may calculate a plurality of measurement values corresponding to a plurality of projection operators in parallel from a single quantum state.

A series of gate operations to be executed by a quantum device is defined by a quantum circuit. A quantum circuit corresponds to a program indicating the procedure of quantum operations. A quantum circuit includes quantum gates, such as controlled NOT (CNOT) gates and controlled Z (CZ) gates. A quantum circuit used for VQE may include a generation circuit that generates a quantum state and a measurement circuit that calculates a plurality of measurement values from the generated quantum state.

The configuration of the measurement circuit is determined based on the specifications of a plurality of projection operators. Each projection operator may be decomposed into two or more Pauli operators. Pauli operators are unit operators that are applied to qubits, and include Pauli X operators, Pauli Y operators, and Pauli Z operators. For this reason, a technique has been proposed that generates the quantum gates of a measurement circuit from the specifications of a plurality of projection operators.

Note that a computer that generates a Pauli graph from a plurality of Pauli strings included in a quantum Hamiltonian, generates an integrated Pauli graph by integrating some of the nodes based on simultaneous observability, and designs a quantum circuit based on the integrated Pauli graph has been proposed. A hybrid system including a classical computer, which outputs initial values of parameters representing a quantum circuit, and a quantum computer, which executes quantum calculations using VQE according to the initial values to generate parameters representing a quantum circuit for calculating energy, has also been proposed.

### Citation List

### Patent Literature

PTL1: Japanese Laid-open Patent Publication No. 2020-144400
PTL2: Japanese Laid-open Patent Publication No. 2020-187451

### Non-Patent Literature

NPTL1: Wakaki Hattori and Shigeru Yamashita, "Quantum Circuit Optimization by Changing the Gate Order for 2D Nearest Neighbor Architectures", Proc. of the 10th International Conference on Reversible Computation (RC 2018), pp. 228-243, September 2018
NPTL2: Pranav Gokhale, Olivia Angiuli, Yongshan Dign, Kaiwen Gui, Teague Tomesh, Martin Suchara, Margaret Martonosi and Frederic T. Chong, "Minimizing State Preparations in Variational Quantum Eigensolver by Partitioning into Commuting Families", arXiv:1907.13623, July 2019.
Reference may be made to EWOUT VAN DEN BERG ET AL: "Circuit optimization of Hamiltonian simulation by simultaneous diagonalization of Pauli clusters", ARXIV.ORG, CORNELL UNIVERSITY LIBRARY, 201 OLIN LIBRARY CORNELL UNIVERSITY ITHACA, NY 14853, 6 September 2020 (2020-09-06) Reference may be made to A Kissinger ET AL: "CNOT circuit extraction for topologically-constrained quantum memories" ,arXiv:1904.00633v2, 29 May 2019 (2019-05-29).

### Summary of Invention

### Technical Problem

In a quantum device, due to physical constraints, each qubit is not necessarily connected to every other qubit. Accordingly, there may be cases where a double input quantum gate, such as a CNOT gate or a CZ gate, is not directly applicable to two qubits that are unconnected. This means that with conventional techniques for generating a quantum circuit from the specifications of projection operators, it may be difficult to generate a highly efficient quantum circuit due to the constraints on the connection relationships between qubits.

As one example, one conceivable method would be to first generate a quantum circuit without considering the connection relationships between qubits and subsequently insert one or more swap gates into the quantum circuit to swap the values of two qubits and thereby satisfy the constraints on the connection relationships. However, a method of subsequently inserting swap gates may generate an inefficient quantum circuit with a large number of quantum gates. For this reason, according to one aspect, it is an object of the present embodiments to generate quantum circuits that are highly efficient.

### Solution to Problem

The present invention is defined by the independent claims, to which reference should now be made. Specific embodiments are defined in the dependent claims. According to an aspect, there is provided an information processing apparatus according to claim 1.

According to another aspect, there is provided a quantum circuit generation method executed by a computer. According to yet another aspect, there is provided a quantum circuit generation program to be executed by a computer.

### Advantageous Effects of Invention

According to the present disclosure, it is possible to generate a highly efficient quantum circuit.

These and other objects, features, and advantages of the present embodiments will become clear from the following description and accompanying drawings, which are exemplary and explanatory.

### Brief Description of Drawings

FIG. 1 depicts an information processing apparatus according to a first embodiment.
FIG. 2 depicts one example of an information processing system according to a second embodiment.
FIG. 3 depicts an example software configuration of the information processing apparatus.
FIG. 4 depicts one example of a quantum circuit including a measurement circuit.
FIG. 5 depicts a first example of designing a measurement circuit using a stabilizer matrix.
FIG. 6 depicts a first example of a measurement circuit.
FIG. 7 depicts a second example of a measurement circuit.
FIG. 8 depicts a second example of designing a measurement circuit using a stabilizer matrix.
FIG. 9 depicts a third example of a measurement circuit.
FIG. 10 is a flowchart depicting an example procedure of quantum circuit generation.
FIG. 11 is a flowchart depicting an example procedure of matrix diagonalization.

### Description of Embodiments

Several embodiments will be described below with reference to the accompanying drawings.

### [First Embodiment]

A first embodiment will now be described.

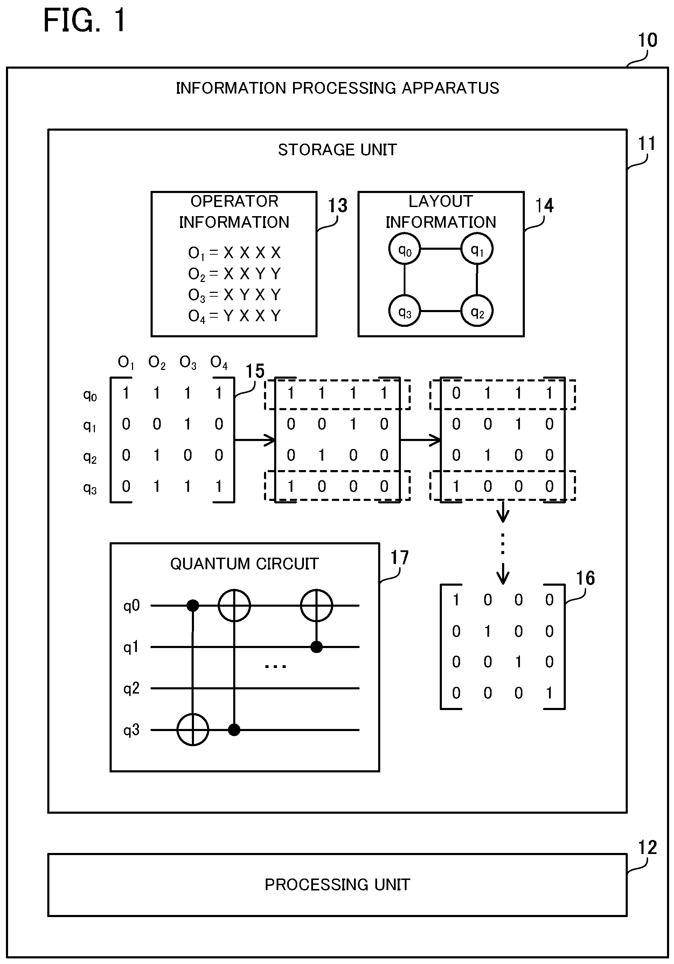

FIG. 1 depicts an information processing apparatus according to a first embodiment.

The information processing apparatus 10 according to the first embodiment generates a quantum circuit that defines a series of gate operations to be executed by a quantum computer. As one example, the quantum computer is a noisy intermediate-scale quantum computer (NISQ), which is a medium-scale quantum computer that does not perform error correction. The information processing apparatus 10 may also be a so-called "classical computer". The information processing apparatus 10 may be a client apparatus or a server apparatus. The information processing apparatus 10 may be referred to as a "computer", a "quantum circuit generation apparatus", or a "design apparatus".

The information processing apparatus 10 includes a storage unit 11 and a processing unit 12. The storage unit 11 may be a volatile semiconductor memory, such as random access memory (RAM), or may be nonvolatile storage, such as a hard disk drive (HDD) or flash memory. As examples, the processing unit 12 is a processor such as a central processing unit (CPU), a graphics processing unit (GPU), or a digital signal processor (DSP). However, the processing unit 12 may include application-specific electronic circuitry, such as an application specific integrated circuit (ASIC) or a field programmable gate array (FPGA). As one example, the processor executes a program stored in a memory, such as RAM (which may be the storage unit 11). A group of processors may be referred to as a "multiprocessor" or simply as a "processor".

The storage unit 11 stores operator information 13 and layout information 14. The operator information 13 indicates a plurality of projection operators that calculate different measurement values from the same quantum state. The quantum circuit generated by the information processing apparatus 10 may be used for VQE. VQE calculates a plurality of measurement values by applying a plurality of projection operators in parallel to a given quantum state, and calculates the sum of the plurality of measurement values, which are weighted using coefficients, as the energy in that quantum state. VQE calculates energy while changing the quantum state and searches for the quantum state with the minimum energy.

Each of the plurality of projection operators is expressed as a combination of a plurality of Pauli operators. The Pauli operators are unit operators for a qubit, and include a Pauli X operator, a Pauli Y operator, and a Pauli Z operator. The Pauli X operator corresponds to bit inversion. The Pauli Y operator corresponds to a combination of bit inversion and phase inversion. The Pauli Z operator corresponds to phase inversion.

The plurality of projection operators may each be represented by a Pauli string in which Pauli operators are indicated in a row. Each character in a Pauli string is X, Y or Z. The length of a Pauli string may be the same as the number of qubits. To adjust the length, the Pauli string may include an identity matrix I representing an identity map. As examples, the projection operator O₁ is XXXX, the projection operator O₂ is XXYY, the projection operator O₃ is XYXY, and the projection operator O₄ is YXXY.

The layout information 14 indicates the connection relationships between a plurality of qubits included in a quantum device. Due to physical constraints, each qubit included in a quantum device is not necessarily connected to every other qubit, and may be connected to only some of the qubits. Although a double input quantum gate is executable for two qubits that are connected, there are cases where the gate is not executable for two qubits that are unconnected.

A plurality of qubits may be laid out in a grid in a quantum device. As one example, a quantum device includes the qubits q₀, q₁, q₂, and q₃ laid out in a grid. The qubits q₀ and q₁ are interconnected, the qubits q₁ and q₂ are interconnected, the qubits q₂ and q₃ are interconnected, and the qubits q₀ and q₃ are interconnected. The qubits q₀ and q₂ are not connected, and the qubits q₁ and q₃ are not connected.

The layout information 14 may be expressed by an undirected graph including nodes corresponding to qubits and edges corresponding to connections. The layout information 14 may also be expressed by an adjacency matrix that includes rows and columns corresponding to qubits, where pairs of unconnected qubits are 0 and pairs of connected qubits are 1.

The processing unit 12 generates a matrix 15 based on the plurality of operators indicated by the operator information 13. The matrix 15 may be an X matrix included in a so-called "stabilizer matrix". The matrix 15 includes a plurality of rows corresponding to the plurality of qubits and a plurality of columns corresponding to the plurality of projection operators. As one example, the matrix 15 includes four rows corresponding to the qubits q₀, q₁, q₂, and q₃ and four columns corresponding to the projection operators O₁, O₂, O₃, and O₄. As one example, each element included in the matrix 15 is a flag which indicates 0 or 1 and has been derived from a Pauli string.

The processing unit 12 performs diagonalization to convert the matrix 15 into a diagonal matrix 16 via one or more row operations. The diagonal matrix 16 is a matrix whose diagonal elements are non-zero and whose off-diagonal elements are zero. As one example, the diagonal matrix 16 is the identity matrix in which the diagonal elements are 1 and the off-diagonal elements are 0. The row operations performed by diagonalization involve selecting two rows based on the connection relationships indicated by the layout information 14 and using one out of the two selected rows to update the other row.

As one example, the row operation is addition of one row to the other row. When each element is a flag indicating 0 or 1, addition of two elements corresponds to an exclusive OR. Diagonalization is performed according to an algorithm called "Gaussian elimination" or "sweeping". However, the two rows on which the row operation is performed are selected under the constraints of the connection relationships between the plurality of qubits. As one example, the processing unit 12 selects two rows corresponding to two qubits that are interconnected, but does not select two rows that correspond to two qubits that are not connected.

As one example, the processing unit 12 uses (1,1,1,1) in row #0 corresponding to the qubit q₀ to update (0,1,1,1) in row #3 corresponding to the qubit q₃ to (1,0,0,0). Next, the processing unit 12 uses (1,0,0,0) in row #3 to update (1,1,1,1) in row #0 to (0,1,1,1). By repeating such row operations according to a specific algorithm, the matrix 15 is converted into the diagonal matrix 16.

Here, row #0 corresponding to the qubit q₀ and row #2 corresponding to the qubit q₂ may include non-zero elements in the same column. In this case also, since the qubit q₀ and q₂ are not connected, there may be constraints on direct row operations between rows #0 and #2. When this happens, the processing unit 12 may combine a row operation on rows #0 and #1 corresponding to the qubits q₀ and q₁ and a row operation on rows #1 and #2 corresponding to the qubits q₁ and q₂ to realize the same calculation results as a row calculation on rows #0 and #2.

A row corresponding to a reference qubit and two or more other rows corresponding to two or more other qubits may include non-zero elements in the same column. When this happens, the processing unit 12 may calculate the number of hops from the reference qubit for each of the two or more qubits and preferentially select a row corresponding to the qubit with the largest number of hops. The qubit with the largest number of hops is the furthest qubit from the reference qubit. The processing unit 12 may perform a row operation to erase non-zero elements preferentially from a row corresponding to the qubit with the largest number of hops.

The processing unit 12 generates a quantum circuit 17 indicating one or more gate operations for a quantum device based on one or more row operations performed during diagonalization. The quantum circuit 17 includes a plurality of lines corresponding to a plurality of qubits and includes one or more quantum gates that are disposed on the lines. The gate operations indicated by the quantum gates are performed in order from left to right.

The quantum gates include CNOT gates. As one example, the processing unit 12 generates a CNOT gate, in which the qubit q₀ is a control bit and the qubit q₃ is a target bit, from a row operation that updates row #3 using row #0. In the same way, the processing unit 12 generates a CNOT gate, in which the qubit q₃ is the control bit and the qubit q₀ is the target bit, from a row operation that updates row #0 using row #3. A CNOT gate does not change the target bit when the control bit is 0, and performs bit inversion on the target bit when the control bit is 1. Bit inversion corresponds to applying an X-gate to the target bit.

The processing unit 12 outputs the generated quantum circuit 17. The processing unit 12 may store the quantum circuit 17 in nonvolatile storage, display the quantum circuit 17 on a display apparatus, or transmit the quantum circuit 17 to another information processing apparatus. Based on the quantum circuit 17, the processing unit 12 may also perform gate operations for a quantum device connected to the information processing apparatus 10.

As described earlier, the information processing apparatus 10 according to the first embodiment generates, based on a plurality of projection operators, generates the quantum circuit 17 for calculating a plurality of measurement values from a quantum state. By doing so, the information processing apparatus 10 supports the designing of the quantum circuit 17, which reduces the burden of designing the quantum circuit 17. The information processing apparatus 10 generates the matrix 15 from a plurality of projection operators, and determines the quantum circuit 17 through diagonalization that converts the matrix 15 into the diagonal matrix 16. By doing so, the information processing apparatus 10 is able to generate the quantum circuit 17 using a uniform method on a variety of projection operators, and is able to generate the quantum circuit 17 at high speed.

Furthermore, the information processing apparatus 10 is able to optimize the quantum circuit 17 through optimization of the diagonalization process performed on the matrix 15. By doing so, a highly efficient quantum circuit 17 with few quantum gates is generated. During the diagonalization of the matrix 15, the information processing apparatus 10 also selects two rows on which a row operation is to be performed in accordance with the constraints on the connection relationships between a plurality of qubits. This speeds up the generation of the quantum circuit 17 compared to a case where the determination of quantum gates to satisfy the specifications of the projection operators and the determination of quantum gates to satisfy the constraints on the connection relationships are performed separately.

A highly efficient quantum circuit 17 with few quantum gates is generated. In particular, the number of quantum gates in the quantum circuit 17 is reduced compared to a case where a quantum circuit that satisfies the specifications of the projection operators is generated and swap gates are then inserted to satisfy the constraints on connection relationships. As a result, the execution time when executing the quantum circuit 17 is reduced. Even when the size of the projection operators is large, quantum computation is completed within the duration (or "coherence time") of the qubits. By reducing the number of quantum gates, the probability of errors occurring also falls.

### [Second Embodiment]

Next, a second embodiment will be described.

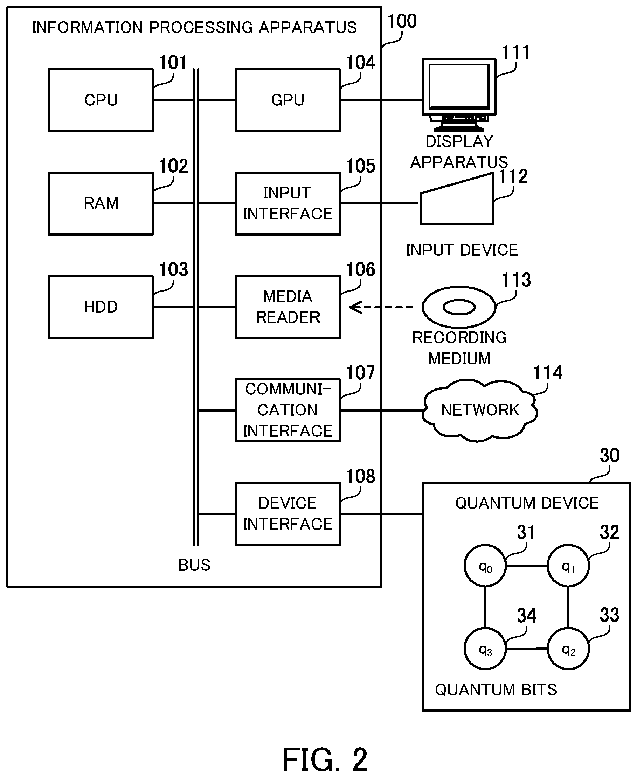

FIG. 2 depicts one example of an information processing system according to the second embodiment.

The information processing apparatus 100 according to the second embodiment generates a quantum circuit used for VQE. A quantum device 30 is connected to the information processing apparatus 100. The quantum device 30 corresponds to a quantum computer. The information processing apparatus 100 corresponds to a so-called "classical computer". The information processing apparatus 100 may be a client apparatus or a server apparatus. The information processing apparatus 100 may be referred to as a "computer", a "quantum circuit generation apparatus", or a "design apparatus". The information processing apparatus 100 corresponds to the information processing apparatus 10 according to the first embodiment.

The information processing apparatus 100 includes a CPU 101, a RAM 102, an HDD 103, a GPU 104, an input interface 105, a media reader 106, a communication interface 107, and a device interface 108, which are connected to a bus. The CPU 101 corresponds to the "processing unit 12" described earlier. The RAM 102 or the HDD 103 corresponds to the "storage unit 11" described earlier.

The CPU 101 is a processor that executes instructions of a program. The CPU 101 loads at least part of the program and data stored in the HDD 103 into the RAM 102, and executes the program. The information processing apparatus 100 may include a plurality of processors. A group of processors may be referred to as a "multiprocessor" or simply as a "processor".

The RAM 102 is a volatile semiconductor memory that temporarily stores programs to be executed by the CPU 101 and data used in computation by the CPU 101. The information processing apparatus 100 may include another type of volatile memory aside from RAM.

The HDD 103 is nonvolatile storage that stores software programs, such as an OS (Operating System), middleware, and application software, as well as data. The information processing apparatus 100 may include other types of nonvolatile storage, such as flash memory or a solid state drive (SSD).

The GPU 104 operates in concert with the CPU 101 to generate images, and outputs the images to a display apparatus 111 connected to the information processing apparatus 100. As examples, the display apparatus 111 is a cathode ray tube (CRT) display, a liquid crystal display, an organic electro luminescence (EL) display, or a projector. Note that other types of output device, such as a printer, may be connected to the information processing apparatus 100.

The input interface 105 receives input signals from an input device 112 connected to the information processing apparatus 100. As examples, the input device 112 is a mouse, a touch panel, or a keyboard. A plurality of input devices may be connected to the information processing apparatus 100.

The media reader 106 is a reader apparatus that reads programs and data recorded on a recording medium 113. As examples, the recording medium 113 is a magnetic disk, an optical disc, or a semiconductor memory. Magnetic disks include flexible disks (FDs) and HDDs. Optical discs include compact discs (CDs) and digital versatile discs (DVDs). The media reader 106 copies a program and data read from the recording medium 113 into another recording medium, such as the RAM 102 or the HDD 103. The read program may be executed by the CPU 101.

The recording medium 113 may be a portable recording medium. The recording medium 113 may be used for distributing programs and data. The recording medium 113 and the HDD 103 may be referred to as "computer-readable recording media".

The communication interface 107 is connected to a network 114 and communicates with other information processing apparatuses via the network 114. The communication interface 107 may be a wired communication interface connected to a wired communication apparatus, such as a switch or a router, or may be a wireless communication interface connected to a wireless communication apparatus, such as a base station or an access point.

The device interface 108 is connected to the quantum device 30. The device interface 108 instructs the quantum device 30 to perform gate operations. The quantum device 30 includes a plurality of qubits. The plurality of qubits include both pairs of qubits that are connected and pairs of qubits that are unconnected, due to their physical layout. A double input quantum gate is executable for a pair of connected qubits and but is not executable for a pair of unconnected qubits.

The quantum device 30 includes qubits 31, 32, 33, and 34 (q₀, q₁, q₂, and q₃). The qubits 31, 32, 33, and 34 are laid out in a grid pattern. The qubits 31 and 32 are connected, the qubits 32 and 33 are connected, the qubits 33 and 34 are connected, and the qubits 31 and 34 are connected. The qubits 31 and 33 are not connected, and the qubits 32 and 34 are not connected.

Here, VQE, which is a quantum chemical calculation, will be described. A quantum chemical calculation is a molecular simulation that estimates molecular states based on the Schrödinger equation. VQE calculates optimal eigenvalues for a molecular state based on variational principles and quantum mechanics. VQE measures the energy of various quantum states and finds the quantum state where energy is minimized.

The energy is calculated by applying the Hamiltonian H indicated by Math (1) to a quantum state as a projection operator. In Math (1), Oᵢ is a generalized Pauli matrix as a partitioned projection operator. The generalized Pauli matrix Oᵢ is expressed as a Pauli string in which Pauli operators, which are unit operators, are aligned. The length (number of characters) of the Pauli string is the same as the number of qubits. The Pauli string may include the identity matrix I for length adjustment. "hᵢ" is a coefficient indicating a weighting of Oᵢ. N is the number of generalized Pauli matrices, and is the same as the number of qubits. Accordingly, the Hamiltonian H is a weighted sum of the generalized Pauli matrices Oᵢ. In VQE, the generalized Pauli matrix Oᵢ and the coefficient hᵢ are specified by the user.
[Math (1)] $H = {\sum }_{i = 1}^{N} {h}_{i} {O}_{i}$

VQE uses N qubits to create a quantum state ψ(θ) and measures energy E. Different quantum states ψ(θ) are generated by changing the parameter θ. The energy E is an expected value obtained by applying the Hamiltonian H to the quantum state ψ(θ), as indicated in Math (2). From Math (1), the energy E is the sum of expected values obtained by applying the generalized Pauli matrix Oᵢ to the quantum state ψ(θ) and weighting by the coefficient hᵢ. VQE repeatedly generates the quantum state ψ(θ), repeatedly calculates a measurement value <ψ(θ)|Oᵢ|ψ(θ)> for each of the N generalized Pauli matrices Oᵢ, and calculates the average as the expected value. In VQE, energy E is defined as the weighted sum of N expected values corresponding to N generalized Pauli matrices Oᵢ.
[Math (2)] $E = \left〈ψ\left(θ\right)\left|H\right|ψ\left(θ\right)\right〉 = {\sum }_{i = 1}^{N} {h}_{i} \left〈ψ\left(θ\right)\left|{O}_{i}\right|ψ\left(θ\right)\right〉$

To calculate a measurement value of the generalized Pauli matrix Oᵢ from the quantum state ψ(θ), the information processing apparatus 100 instructs the quantum device 30 to perform a gate operation. Various quantum gates that are usable in a quantum circuit will now be described.

The quantum gates include the Pauli X gate, the Pauli Y gate, and the Pauli Z gate indicated in Math (3). The Pauli X gate, the Pauli Y gate, and the Pauli Z gate are single-qubit gates that act on one qubit. The Pauli X gate is a 180-degree rotation about the X axis and corresponds to bit inversion. The Pauli Y gate is a 180-degree rotation about the Y axis and corresponds to a combination of bit inversion and phase inversion. The Pauli Z gate is a 180-degree rotation about the Z axis, which corresponds to phase inversion. The Pauli Y gate has the properties of both the Pauli X gate and the Pauli Z gate.
[Math (3)] $X = \left[\begin{matrix}0 & 1 \\ 1 & 0\end{matrix}\right] , Y = \left[\begin{matrix}0 & - i \\ i & 0\end{matrix}\right] , Z = \left[\begin{matrix}1 & 0 \\ 0 & - 1\end{matrix}\right]$

The quantum gate includes a Hadamard gate H and a phase shift gate S indicated in Math (4). The Hadamard gate H and the phase shift gate S are single-qubit gates that act on one qubit. The Hadamard gate H is a 180-degree rotation about a 45-degree axis between the X and Z axes. The phase shift gate S is a 90-degree phase rotation.
[Math (4)] $H = \frac{1}{\sqrt{2}} \left[\begin{matrix}1 & 1 \\ 1 & - 1\end{matrix}\right] , S = \left[\begin{matrix}1 & 0 \\ 0 & i\end{matrix}\right]$

The quantum gates include a CNOT gate and a CZ gate indicated in Math (5). The CNOT gate and the CZ gate are double-qubit gates that act on two qubits. The CNOT gate applies a Pauli-X gate to one qubit, referred to as the "target bit", when the other qubit, referred to as the "control bit", is 1. The CNOT gate corresponds to an exclusive OR of two qubits, and corresponds to addition of the two qubits. The CZ gate applies a Pauli Z gate to the target bit when the control bit is 1.
[Math (5)] $CNOT = \left[\begin{matrix}1 & 0 & 0 & 0 \\ 0 & 1 & 0 & 0 \\ 0 & 0 & 0 & 1 \\ 0 & 0 & 1 & 0\end{matrix}\right] , CZ = \left[\begin{matrix}1 & 0 & 0 & 0 \\ 0 & 1 & 0 & 0 \\ 0 & 0 & 1 & 0 \\ 0 & 0 & 0 & - 1\end{matrix}\right]$

Next, the software configuration of the information processing apparatus 100 will be described.

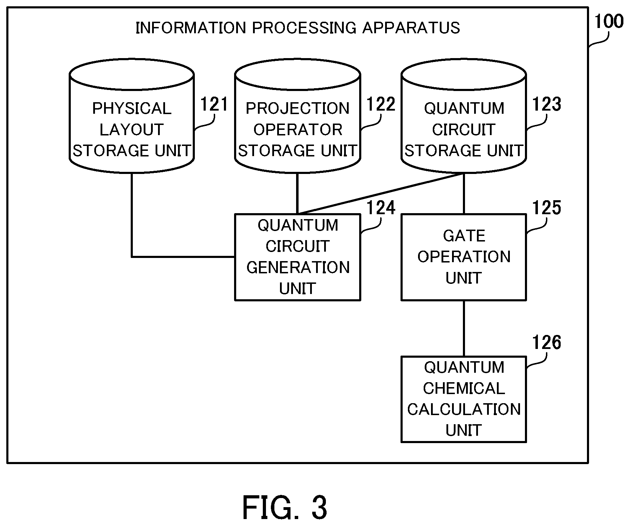

FIG. 3 depicts an example software configuration of the information processing apparatus.

The information processing apparatus 100 includes a physical layout storage unit 121, a projection operator storage unit 122, and a quantum circuit storage unit 123. These storage units are realized using the RAM 102 or the HDD 103, for example. The information processing apparatus 100 also includes a quantum circuit generation unit 124, a gate operation unit 125, and a quantum chemical calculation unit 126. These processing units are realized using the CPU 101 and programs, for example.

The physical layout storage unit 121 stores physical layout information for the quantum device 30. The physical layout information indicates the connection relationships between the qubits of the quantum device 30. The physical layout information may be an undirected graph including nodes corresponding to qubits and edges corresponding to connections. The physical layout information may also be an adjacency matrix that includes rows and columns corresponding to the qubits, where pairs of unconnected qubits are 0 and pairs of connected qubits are 1.

The projection operator storage unit 122 stores projection operator information. The projection operator information includes N generalized Pauli matrices Oᵢ and N coefficients hᵢ that have been specified by the user. Each generalized Pauli matrix Oᵢ is represented by a Pauli string of length N. Each character in the Pauli string is an X, Y or Z. However, the Pauli character string may include I for length adjustment.

The quantum circuit storage unit 123 stores the quantum circuit generated by the information processing apparatus 100. The quantum circuit corresponds to a program that defines the procedure of gate operations executed by the quantum device 30. The quantum circuit generated by the information processing apparatus 100 includes a plurality of quantum gates for VQE. As described later, this quantum circuit includes an Ansatz circuit that generates a quantum state and a measurement circuit that performs observations based on N generalized Pauli matrices in parallel.

The quantum circuit generation unit 124 generates a quantum circuit based on the physical layout information stored in the physical layout storage unit 121 and the projection operator information stored in the projection operator storage unit 122. The quantum circuit generation unit 124 stores the generated quantum circuit in the quantum circuit storage unit 123. As described later, the quantum circuit generation unit 124 generates a stabilizer matrix from N Pauli strings representing N generalized Pauli matrices, and uses the stabilizer matrix to determine the quantum gates of a measurement circuit. When doing so, the quantum circuit generation unit 124 determines an efficient procedure for diagonalizing the stabilizer matrix and generates quantum gates corresponding to the determined procedure.

The gate operation unit 125 instructs the quantum device 30 to perform gate operations indicated by the quantum circuit stored in the quantum circuit storage unit 123. The gate operation unit 125 reads measurement values from the quantum device 30 and reports the values to the quantum chemical calculation unit 126.

The quantum chemical calculation unit 126 executes VQE. The quantum chemical calculation unit 126 specifies the parameter θ of the quantum state ψ(θ), requests the gate operation unit 125 to execute a quantum circuit, and acquires N measurement values corresponding to the N generalized Pauli matrices. One measurement value of one generalized Pauli matrix is a binary value that is 0 or 1. The quantum chemical calculation unit 126 repeatedly executes the quantum circuit, averages the measurement values, and calculates N expected values corresponding to the N generalized Pauli matrices.

The quantum chemical calculation unit 126 calculates the energy E corresponding to the quantum state ψ(θ) using a weighted sum of N expected values. The quantum chemical calculation unit 126 calculates the energy E while changing the parameter θ, and searches for a quantum state ψ(θ) where the energy E is minimized. The quantum chemical calculation unit 126 outputs the VQE execution result. The quantum chemical calculation unit 126 may store the execution result in nonvolatile storage such as the HDD 103, display the execution result on the display apparatus 111, or transmit the execution result to another information processing apparatus.

Next, a quantum circuit generated by the information processing apparatus 100 will be described.

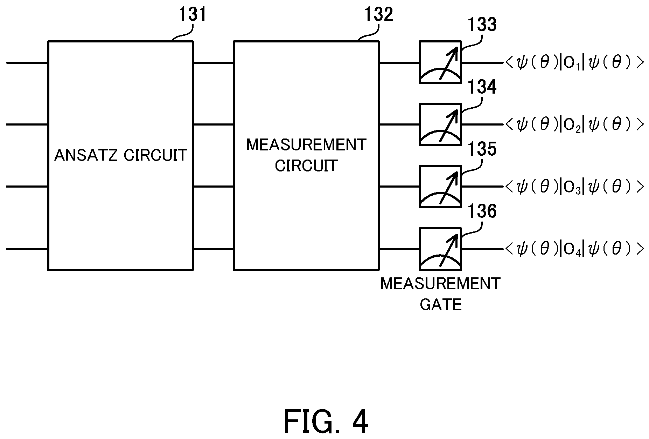

FIG. 4 depicts one example of a quantum circuit including a measurement circuit.

In this second embodiment, one example where N=4 will be given to simplify the explanation. The quantum circuit includes an Ansatz circuit 131, a measurement circuit 132, and measurement gates 133, 134, 135, and 136. The Ansatz circuit 131 initializes the qubits 31, 32, 33, and 34 (q₀, q₁, q₂, and q₃) so as to represent a quantum state ψ(θ) according to the parameter θ.

The measurement circuit 132 makes observations of the quantum state ψ(θ) in parallel based on the generalized Pauli matrices O₁, O₂, O₃, and O₄. The measurement circuit 132 performs gate operations on the qubits 31, 32, 33, and 34 according to the specifications of the generalized Pauli matrices O₁, O₂, O₃, and O₄. By doing so, the qubits 31, 32, 33, and 34 hold the measurement values of the generalized Pauli matrices O₁, O₂, O₃, and O₄. As one example, the qubit 31 holds a measurement value of the generalized Pauli matrix O₁, the qubit 32 holds the measurement value of the generalized Pauli matrix O₂, the qubit 33 holds the measurement value of the generalized Pauli matrix O₃, and the qubit 34 holds the measurement value of the generalized Pauli matrix O₄. However, depending on the design of the measurement circuit 132, the correspondence between the qubits 31, 32, 33, and 34 and the generalized Pauli matrices O₁, O₂, O₃, and O₄ may change.

The measurement gates 133, 134, 135, and 136 each read a binary value of 0 or 1 from a qubit. The measurement gate 133 reads the value of the qubit 31, the measurement gate 134 reads the value of the qubit 32, the measurement gate 135 reads the value of the qubit 33, and the measurement gate 136 reads the value of the qubit 34.

Here, the measurement circuit 132 is automatically generated from the specification of a generalized Pauli matrix. However, even from the same generalized Pauli matrix, the number of quantum gates in the measurement circuit 132 will differ depending on the generation algorithm. Typically, the larger the number of quantum gates in a measurement circuit, the larger the number of quantum gates aligned in series (which may also be referred to as the "depth" or "length" of a quantum circuit).

The execution time per quantum gate varies from several nanoseconds to several hundred nanoseconds, and the calculation time will increase as the depth of the quantum circuit increases. Since one quantum calculation needs to be completed within the duration of a qubit, when the depth of the quantum circuit is excessive, there is the risk of a quantum calculation not being completed. Since errors occur with a fixed probability for each quantum gate, the greater the depth of a quantum circuit, the higher the probability of errors in the output of the quantum circuit.

For this reason, it is preferable for the quantum circuit generation unit 124 to generate an efficient measurement circuit 132 with few quantum gates. In the following description, one example of a generation algorithm that generates the measurement circuit 132 using a stabilizer matrix will be described, and then another generation algorithm in which the measurement circuit 132 has even fewer quantum gates will be described. As one example, a generation algorithm that uses a stabilizer matrix is described in NPTL2 cited earlier.

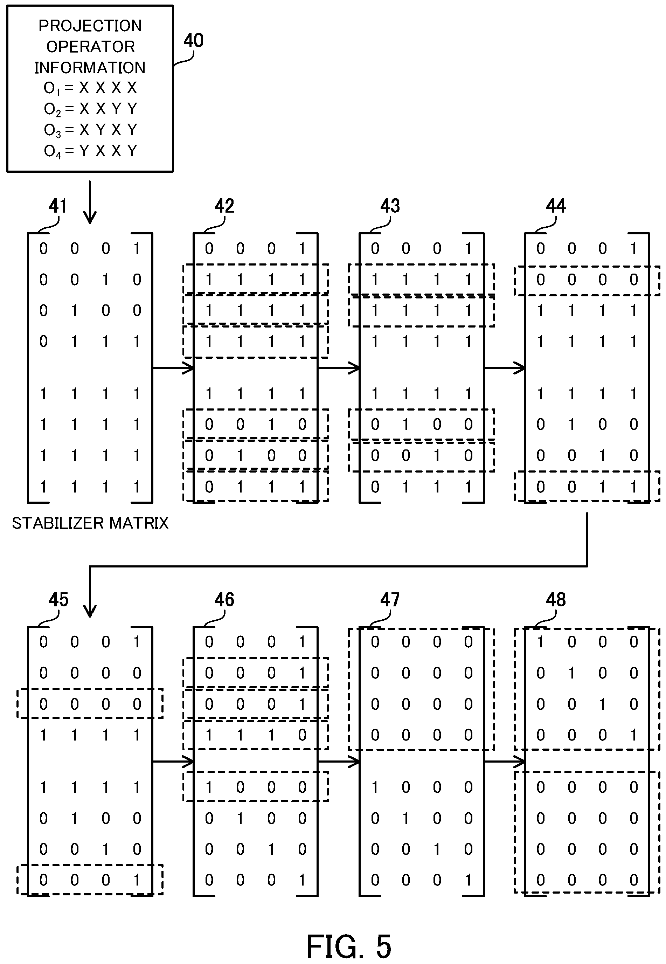

FIG. 5 depicts a first example of designing a measurement circuit using a stabilizer matrix.

Here, the quantum circuit generation unit 124 generates a measurement circuit corresponding to projection operator information 40. The projection operator information 40 includes Pauli character strings of the generalized Pauli matrices O₁, O₂, O₃, and O₄. Here, O₁=XXXX, O₂=XXYY, O₃=XYXY, and O₄=YXXY.

The quantum circuit generation unit 124 generates a 2N×N stabilizer matrix 41. The N rows in the upper half of the stabilizer matrix 41 form a Z matrix, and the N rows in the lower half of the stabilizer matrix 41 form an X matrix. The N columns in the stabilizer matrix 41 correspond to N Pauli character strings. The N rows in the Z matrix and the N rows in the X matrix correspond to N qubits.

For this reason, the stabilizer matrix 41 generated here has columns #0, #1, #2, and #3 corresponding to the generalized Pauli matrices O₁, O₂, O₃, and O₄. The Z matrix and the X matrix included in the stabilizer matrix 41 have rows #0, #1, #2, and #3 corresponding to the qubits 31, 32, 33, 34 (q₀, q₁, q₂, and q₃).

Each element in the stabilizer matrix 41 is a flag which is 0 or 1. The quantum circuit generation unit 124 determines the value (i,j) of the Z matrix and the value (i,j) of the X matrix based on the i^{th} character included in the generalized Pauli matrix Oⱼ. When the i^{th} character of the generalized Pauli matrix Oⱼ is X, Z(i,j)=0 and X(i,j)=1. When the i^{th} character of the generalized Pauli matrix Oⱼ is Y, Z(i,j)=1 and X(i,j)=1. When the i^{th} character of the generalized Pauli matrix Oⱼ is Z, Z(i,j)=1 and X(i,j)=0. Note that when the i^{th} character of the generalized Pauli matrix Oⱼ is I, Z(i,j)=0 and X(i,j)=0 may be given.

Next, the quantum circuit generation unit 124 calculates the ranks of the Z matrix and the X matrix, and swaps row #i of the Z matrix and row #i of the X matrix so as to maximize the rank of the Z matrix or the X matrix. Here, the quantum circuit generation unit 124 swaps the rows #1, #2, and #3 of the Z matrix with the rows #1, #2, and #3 of the X matrix. By doing so, a stabilizer matrix 42 is generated. Swapping the row #i corresponds to executing a Hadamard gate on the qubit qᵢ.

Next, the quantum circuit generation unit 124 converts the X matrix into a diagonal matrix using Gaussian elimination. Gaussian elimination is sometimes referred to as "sweeping". Since each element is binary, that is 0 or 1, the diagonalized X matrix is the identity matrix. That is, the diagonalized X matrix is a matrix in which the diagonal elements are 1 and the off-diagonal elements are 0.

The Gaussian elimination performed on the X matrix repeats a row operation of adding a given row to another row as a basic modification. Since each element has a binary value of 0 or 1, the sum of two rows corresponds to an exclusive OR performed on the two rows. During this operation, the quantum circuit generation unit 124 performs addition in the Z matrix in the opposite direction to the X matrix. That is, when row #i of the X matrix has been added to row #j, the quantum circuit generation unit 124 adds row #j of the Z matrix to row #i. A row operation that adds row #i of the X matrix to row #j corresponds to a CNOT gate that updates the qubit qⱼ based on the qubit qᵢ.

During Gaussian elimination, the quantum circuit generation unit 124 may swap columns in the stabilizer matrix. Swapping columns does not affect the structure of the measurement circuit. However, swapping columns changes the correspondence between the qubits q₀, q₁, q₂, and q₃ and the generalized Pauli matrices O₁, O₂, O₃, and O₄ at the time of output of the measurement circuit.

When column #i and column #j are swapped, the qubit qᵢ corresponds to the generalized Pauli matrix O₃, and the qubit qⱼ corresponds to the generalized Pauli matrix Oᵢ. For this reason, when the columns of the stabilizer matrix are swapped, the quantum circuit generation unit 124 records the order of the generalized Pauli matrices O₁, O₂, O₃, and O₄. When the quantum chemical calculation unit 126 reads out four measurement values from the quantum device 30, the correspondence between the generalized Pauli matrices O₁, O₂, O₃, O₄ and the four measurement values is interpreted based on the information described above and the four measurement values are rearranged into order.

Here, the quantum circuit generation unit 124 adds row #1 of the X matrix to row #2, adds row #2 of the X matrix to row #1, and adds row #1 of the X matrix to row #2. While doing so, the quantum circuit generation unit 124 adds row #2 of the Z matrix to row #1, adds row #1 of the Z matrix to row #2, and adds row #2 of the Z matrix to row #1. By doing so, a stabilizer matrix 43 is generated.

In addition, the quantum circuit generation unit 124 adds row #1 of the X matrix to row #3. While doing so, the quantum circuit generation unit 124 adds row #3 of the Z matrix to row #1. By doing so, a stabilizer matrix 44 is generated. The quantum circuit generation unit 124 also adds row #2 of the X matrix to row #3. While doing so, the quantum circuit generation unit 124 adds row #3 of the Z matrix to row #2. By doing so, a stabilizer matrix 45 is generated.

The quantum circuit generation unit 124 adds row #3 of the X matrix to row #1, adds row #2 of the X matrix to row #1, and adds row #1 of the X matrix to row #0. While doing so, the quantum circuit generation unit 124 adds row #0 of the Z matrix to row #3, adds row #0 of the Z matrix to row #2, and adds row #0 of the Z matrix to row #1. By doing so, a stabilizer matrix 46 is generated. The X matrix included in the stabilizer matrix 46 is a diagonal matrix.

Next, the quantum circuit generation unit 124 converts the Z matrix into a zero matrix. This conversion to a zero matrix uses an operation that sets the diagonal elements Z (i,i) to 0, and an operation to set the off-diagonal elements Z (i,j) and Z (j,i) to 0. Z(i,i)=0 corresponds to performing a phase shift gate on the qubit qᵢ. Z(i,j)=0 and Z(j,i)=0 correspond to performing a CZ gate on the qubits qᵢ and qⱼ. Note that the effects described here of the phase shift gate and the CZ gate on the Z matrix have a premise that the X matrix has been diagonalized.

Here, the quantum circuit generation unit 124 executes a Z(0,3)=0, Z(3,0)=0 operation, a Z(1,3)=0, Z(3,1)=0 operation and a Z(2,3)=0, Z(3,2)=0 operation. By doing so, a stabilizer matrix 47 is generated. The Z matrix included in the stabilizer matrix 47 is a zero matrix.

Next, the quantum circuit generation unit 124 swaps all of the rows in the Z matrix and the X matrix. As mentioned earlier, swapping row #i corresponds to executing a Hadamard gate on the qubit q₁. By doing so, a stabilizer matrix 48 is generated. The Z matrix included in the stabilizer matrix 48 is a diagonal matrix, and the X matrix included in the stabilizer matrix 48 is a zero matrix.

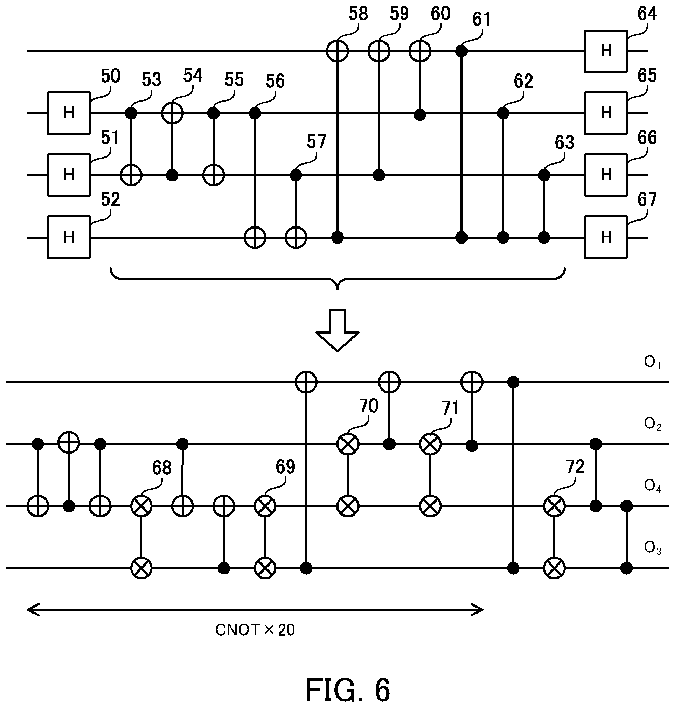

FIG. 6 depicts a first example of a measurement circuit.

The quantum circuit generation unit 124 generates a measurement circuit by generating quantum gates corresponding to the above operation of diagonalizing the stabilizer matrix 41. The measurement circuit generated by the algorithm in FIG. 5 includes quantum gates 50 to 67.

The quantum gates 50, 51, and 52 are Hadamard gates performed on the qubits q₁, q₂, and q₃. The quantum gate 53 is a CNOT gate from the qubit q₁ to the qubit q₂. The quantum gate 54 is a CNOT gate from the qubit q₂ to the qubit q₁. The quantum gate 55 is a CNOT gate from the qubit q₁ to the qubit q₂. The quantum gate 56 is a CNOT gate from the qubit q₁ to the qubit q₃. The quantum gate 57 is a CNOT gate from the qubit q₂ to the qubit q₃. The quantum gate 58 is a CNOT gate from the qubit q₃ to the qubit q₀. The quantum gate 59 is a CNOT gate from the qubit q₂ to the qubit q₀. The quantum gate 60 is a CNOT gate from the qubit q₁ to the qubit q₀. The quantum gate 61 is a CZ gate on the qubits q₀ and q₃. The quantum gate 62 is a CZ gate on the qubits q₁ and q₃. The quantum gate 63 is a CZ gate on the qubits q₂ and q₃. The quantum gates 64, 65, 66, and 67 are Hadamard gates on the qubits q₀, q₁, q₂, and q₃.

However, this measurement circuit does not satisfy the constraints on the connection relationships between the qubits in the quantum device 30, and is not executable by the quantum device 30. As examples, the quantum gates 56 and 62 are not executable due to the qubits q₁ and q₃ not being connected. The quantum gate 59 is not executable due to the qubits q₀ and q₂ not being connected.

For this reason, the quantum circuit generation unit 124 refers to the physical layout information and modifies the measurement circuit that was generated based on the stabilizer matrix. Here, the quantum circuit generation unit 124 inserts a swap gate that swaps the values of two qubits into the measurement circuit. The swap gate may be implemented using three CNOT gates. A swap gate for the qubits qᵢ and qⱼ is equivalent to a CNOT gate from the qubit qᵢ to the qubit q₃, a CNOT gate from the qubit qⱼ to the qubit qᵢ, and a CNOT gate from the qubit qᵢ to the qubit qⱼ.

Here, the quantum circuit generation unit 124 inserts a quantum gate 68 between the quantum gate 55 and the quantum gate 56. The quantum circuit generation unit 124 inserts a quantum gate 69 between the quantum gate 57 and the quantum gate 58. The quantum circuit generation unit 124 inserts a quantum gate 70 between the quantum gate 58 and the quantum gate 59. The quantum circuit generation unit 124 inserts a quantum gate 71 between the quantum gate 59 and the quantum gate 60. The quantum circuit generation unit 124 also inserts a quantum gate 72 between the quantum gate 61 and the quantum gate 62.

The quantum gates 68, 69, 70, 71, and 72 are swap gates. Note that since the effective positions of the qubits change due to the insertion of the swap gates, the lines where other quantum gates are laid out also change in the quantum circuit diagram.

By doing so, a measurement circuit corresponding to the projection operator information 40 is generated. However, swap gates are subsequently inserted in the measurement circuit that has been generated based on the stabilizer matrix. This means that even when the diagonalization of the stabilizer matrix is optimized, the measurement circuit that is ultimately generated may be an inefficient quantum circuit with many quantum gates. In the example of FIG. 6, the number of CNOT gates in the diagonalized part of the X matrix is 20.

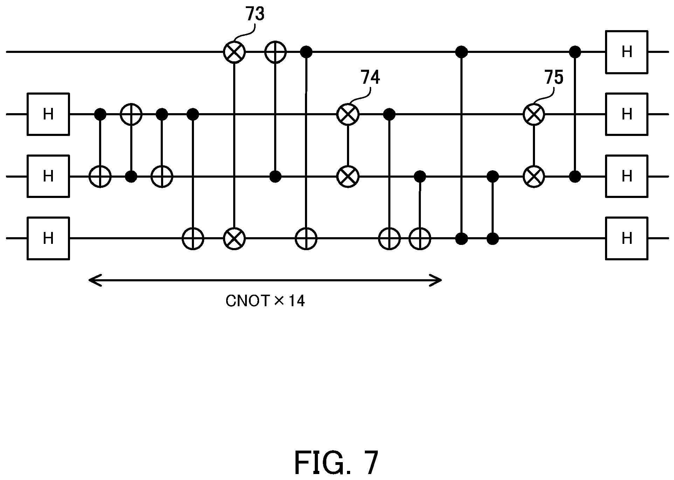

FIG. 7 depicts a second example of a measurement circuit.

Here, an example of a measurement circuit generated using the generation algorithm in the NPTL1 cited earlier will be given. Swap gates 73, 74, and 75 are inserted into this measurement circuit to satisfy the constraints on the connection relationships in the quantum device 30. The number of CNOT gates in the section corresponding to the diagonalized part of the X matrix depicted in FIG. 6 is 14.

For this reason, the information processing apparatus 100 according to the second embodiment modifies the generation algorithm so that the number of quantum gates in the measurement circuit is further reduced. In the Gaussian elimination method indicated in FIG. 5, the information processing apparatus 100 appropriately selects rows in the X matrix for the execution of an addition operation so as to satisfy the constraints on connection relationships in the quantum device 30. By doing so, the measurement circuit that is generated through diagonalization of the stabilizer matrix will already satisfy the constraints on the connection relationships, so that the information processing apparatus 100 does not need to subsequently modify the measurement circuit. This means that by optimizing the diagonalization of the stabilizer matrix, it is possible to generate a highly efficient measurement circuit with few quantum gates.

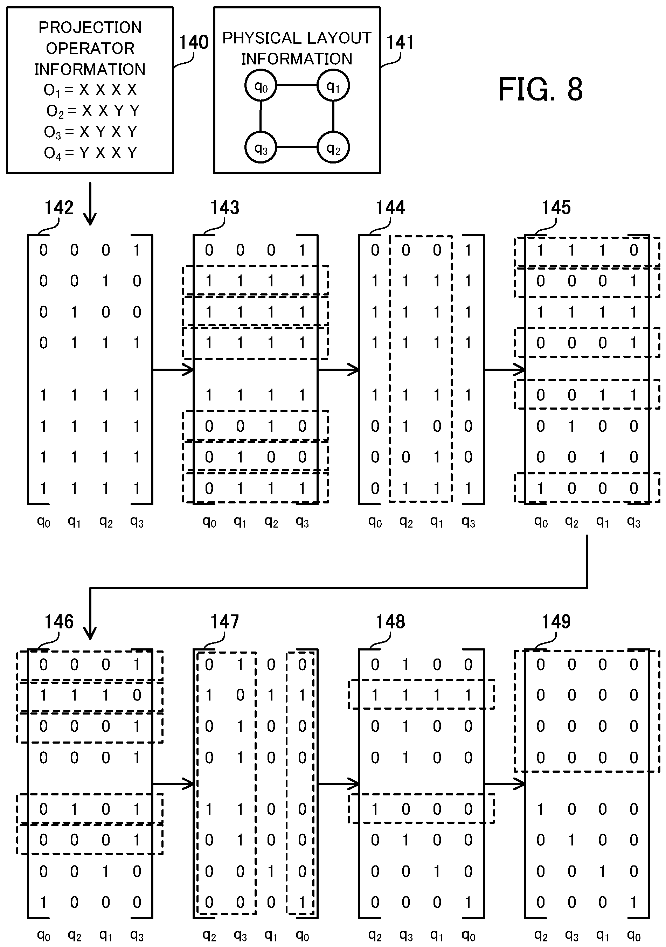

FIG. 8 depicts a second example of designing a measurement circuit using a stabilizer matrix.

The quantum circuit generation unit 124 generates a stabilizer matrix 142 based on the projection operator information 140. The projection operator information 140 is the same as the projection operator information 40 in FIG. 5. The stabilizer matrix 142 is the same as the stabilizer matrix 41 in FIG. 5. The quantum circuit generation unit 124 swaps row #i of the Z matrix and row #i of the X matrix so that the rank of the Z matrix or the X matrix of the stabilizer matrix 142 is maximized. By doing so, a stabilizer matrix 143 that is the same as the stabilizer matrix 42 in FIG. 5 is generated.

Next, the quantum circuit generation unit 124 refers to the physical layout information 141 and performs Gaussian elimination on the X matrix of the stabilizer matrix 143 to diagonalize the X matrix. The physical layout information 141 indicates the connection relationships between the qubits q₀, q₁, q₂, and q₃. By performing addition operations that are limited to pairs of rows corresponding to pairs of connected qubits, the quantum circuit generation unit 124 diagonalizes the X matrix in a procedure that satisfies the constraints on the connection relationships.

The quantum circuit generation unit 124 sequentially selects four columns corresponding to the generalized Pauli matrices O₁, O₂, O₃, and O₄. The quantum circuit generation unit 124 selects elements in which 1 remains (that is, diagonal elements) from the selected columns. When doing so, the quantum circuit generation unit 124 may swap the columns in the stabilizer matrix so that the X matrix is efficiently diagonalized. The quantum circuit generation unit 124 selects a qubit corresponding to a selected element as a center bit.

The quantum circuit generation unit 124 calculates the distance d between the center bit and each of the other qubits based on the physical layout information 141. The distance d is the number of connections passed from one qubit to another qubit, and corresponds to the number of hops.

When the selected column includes an element that is 1 aside from the element corresponding to the center bit, the quantum circuit generation unit 124 performs an addition operation so that the element corresponding to the center bit becomes 1 and the other elements become 0. At this time, the quantum circuit generation unit 124 performs the addition operation so that elements are set at zero preferentially from elements corresponding to qubits where the distance d is large. That is, the quantum circuit generation unit 124 sets the state of the faraway qubits at "0" and brings the "1" state closer to the center bit, in order starting from the furthest qubit and moving toward the center bit.

Here, the quantum circuit generation unit 124 selects column #0 corresponding to the generalized Pauli matrix O₁ from the stabilizer matrix 143. Since the element in row #0 is 1 and the elements in rows #1, #2, and #3 are 0, column #0 of the X matrix has already been diagonalized. Accordingly, processing of the selected column is skipped. Next, the quantum circuit generation unit 124 swaps columns #1 and #2 of the stabilizer matrix 143. By doing so, a stabilizer matrix 144 is generated. The reason columns #1 and #2 are swapped is to efficiently set the diagonal elements of row #1 to 1.

Next, the quantum circuit generation unit 124 selects column #1 corresponding to the generalized Pauli matrix O₃ from the stabilizer matrix 144. The quantum circuit generation unit 124 selects the qubit q₁ corresponding to row #1 as the center bit, and preferentially processes row #3 corresponding to the qubit q₃ that is farthest from the qubit q₁. In more detail, the quantum circuit generation unit 124 adds row #0 of the X matrix to row #3, adds row #3 of the X matrix to row #0, and adds row #1 of the X matrix to row #0. While doing so, the quantum circuit generation unit 124 adds row #3 of the Z matrix to row #0, adds row #0 of the Z matrix to row #3, and adds row #0 of the Z matrix to row #1.

As a result, the stabilizer matrix 145 is generated. In the stabilizer matrix 145, since the element in row #1 is 1 and the elements in rows #0, #2, and #3 are 0, column #1 of the X matrix has already been diagonalized. For this reason, the processing of the selected column ends.

Next, the quantum circuit generation unit 124 selects column #2 corresponding to the generalized Pauli matrix O₂ from the stabilizer matrix 145. The quantum circuit generation unit 124 selects the qubit q₂ corresponding to row #2 as the center bit, and preferentially processes row #0 corresponding to the qubit q₀ that is farthest from the qubit q₂. In more detail, the quantum circuit generation unit 124 adds row #2 of the X matrix to row #1, adds row #1 of the X matrix to row #0, and adds row #0 of the X matrix to row #1. While doing so, the quantum circuit generation unit 124 adds row #1 of the Z matrix to row #2, adds row #0 of the Z matrix to row #1, and adds row #1 of the Z matrix to row #0.

After the addition operation described above, X(1,2)=1, and an element that is 1 remains in the column #2 in addition to the element corresponding to the center bit. For this reason, the quantum circuit generation unit 124 processes row #1 corresponding to the qubit q₁. In more detail, the quantum circuit generation unit 124 adds row #2 of the X matrix to row #1. While doing so, the quantum circuit generation unit 124 adds row #1 of the Z matrix to row #2. By doing so, a stabilizer matrix 146 is generated. In the stabilizer matrix 146, since the element in row #2 is 1 and the elements in rows #0, #1, and #3 are 0, column #2 of the X matrix has already been diagonalized. For this reason, the processing of the selected column ends.

Next, the quantum circuit generation unit 124 swaps columns #0 and #1 of the stabilizer matrix 143, and swaps columns #1 and #3. By doing so, a stabilizer matrix 147 is generated. All diagonal elements of the X matrix included in the stabilizer matrix 147 are 1.

Next, the quantum circuit generation unit 124 selects column #1, which corresponds to the generalized Pauli matrix O₄, as the last column from the stabilizer matrix 147. Since the diagonal element of column #1 is in row #1, the quantum circuit generation unit 124 selects the qubit q₁ corresponding to row #1 as the center bit and processes row #0 corresponding to the qubit q₀. In more detail, the quantum circuit generation unit 124 adds row #1 of the X matrix to row #0. While doing so, the quantum circuit generation unit 124 adds row #0 of the Z matrix to row #1. By doing so, a stabilizer matrix 148 is generated.

The X matrix included in the stabilizer matrix 148 is a diagonal matrix. For this reason, the Gaussian elimination method ends. After this, the quantum circuit generation unit 124 converts the Z matrix included in the stabilizer matrix 148 into a zero matrix. Here, the quantum circuit generation unit 124 executes a Z(1,1)=0 operation, a Z(0,1)=0, Z(1,0)=0 operation, a Z(1,2)=0, Z(2,1)=0 operation, and a Z(1,3)=0, Z(3,1)=0 operation.

By doing so, a stabilizer matrix 149 is generated. The Z matrix included in the stabilizer matrix 149 is a zero matrix, and the X matrix included in the stabilizer matrix 149 is a diagonal matrix. The quantum circuit generation unit 124 swaps the Z matrix and the X matrix. By doing so, the same stabilizer matrix as the stabilizer matrix 48 in FIG. 5 is generated.

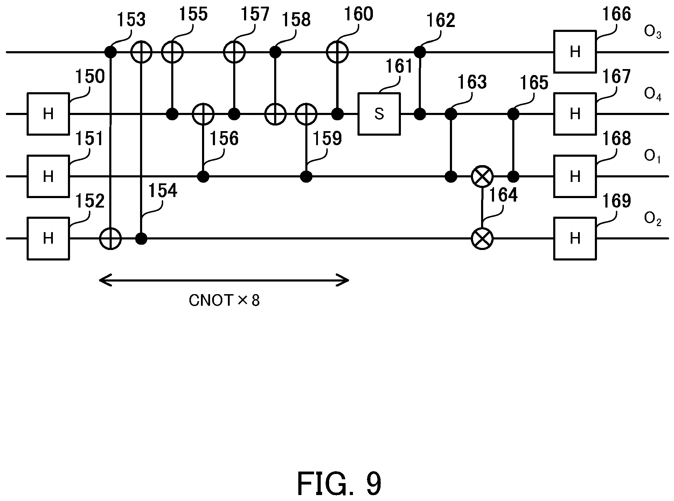

FIG. 9 depicts a third example of a measurement circuit.

The quantum circuit generation unit 124 generates a measurement circuit by generating quantum gates corresponding to the above operation of diagonalizing the stabilizer matrix 142. The measurement circuit generated by the algorithm of FIG. 8 includes quantum gates 150 to 169.

The quantum gates 150, 151, and 152 are Hadamard gates performed on the qubits q₁, q₂, and q₃. The quantum gate 153 is a CNOT gate from the qubit q₀ to the qubit q₃. The quantum gate 154 is a CNOT gate from the qubit q₃ to the qubit q₀. The quantum gate 155 is a CNOT gate from the qubit q₁ to the qubit q₀. The quantum gate 156 is a CNOT gate from the qubit q₂ to the qubit q₁. The quantum gate 157 is a CNOT gate from the qubit q₁ to the qubit q₀. The quantum gate 158 is a CNOT gate from the qubit q₀ to the qubit q₁. The quantum gate 159 is a CNOT gate from the qubit q₂ to the qubit q₁. The quantum gate 160 is a CNOT gate from the qubit q₁ to the qubit q₀.

The quantum gate 161 is a phase shift gate to the qubit q₁. The quantum gate 162 is a CZ gate on the qubits q₀, q₁. The quantum gate 163 is a CZ gate on the qubits q₁ and q₂. The quantum gate 164 is a swap gate for the qubits q₂ and q₃. The quantum gate 165 is a CZ gate on the qubits q₁ and q₂. The quantum gates 166, 167, 168, and 169 are Hadamard gates on the qubits q₀, q₁, q₂, and q₃. Note that since the columns of the stabilizer matrix are swapped, the qubits q₀, q₁, q₂, and q₃ at the time of output correspond to the generalized Pauli matrices O₃, O₄, O₁, and O₂.

The number of CNOT gates in the diagonalized part of the X matrix is 8. In this way, a highly efficient measurement circuit with fewer CNOT gates than in FIGS. 6 and 7 is generated.

Next, the processing procedure of the information processing apparatus 100 will be described.

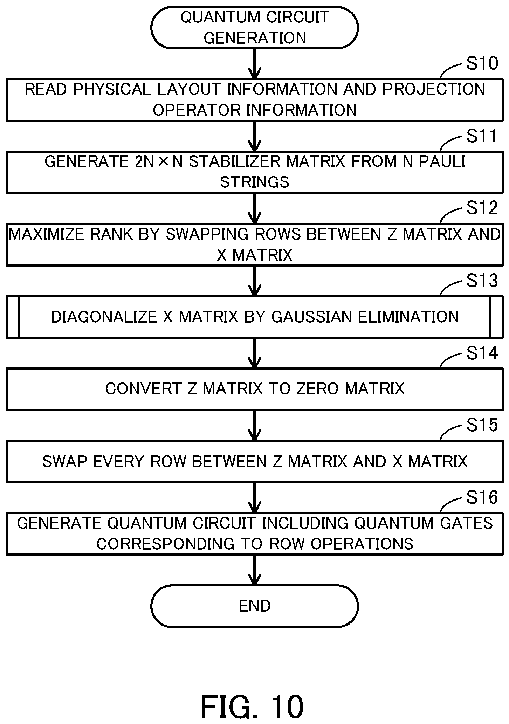

FIG. 10 is a flowchart depicting an example procedure of quantum circuit generation.

(S10) The quantum circuit generation unit 124 reads the physical layout information, which indicates the connection relationships between the qubits of the quantum device 30, and the projection operator information, which indicates N Pauli character strings.

(S11) The quantum circuit generation unit 124 generates, from the N Pauli strings, a 2N×N stabilizer matrix including an N×N Z matrix and an N×N X matrix.

(S12) The quantum circuit generation unit 124 maximizes the rank of one of the Z matrix and the X matrix by swapping rows between the Z matrix and the X matrix.

(S13) The quantum circuit generation unit 124 diagonalizes the X matrix by Gaussian elimination. When doing so, the quantum circuit generation unit 124 selects a row pair to be subjected to an operation so as to satisfy the constraints on the connection relations indicated by the physical layout information. Matrix diagonalization will be described in detail later.

(S14) The quantum circuit generation unit 124 converts the Z matrix into a zero matrix.

(S15) The quantum circuit generation unit 124 swaps every row between the Z matrix and the X matrix.

(S16) The quantum circuit generation unit 124 generates a quantum circuit including quantum gates corresponding to the matrix operations performed in steps S12 to S15, and stores the quantum circuit. The quantum circuit generation unit 124 stores information indicating the correspondence between the measurement values of the N qubits and the N Pauli character strings based on the swapping of columns performed in the stabilizer matrix.

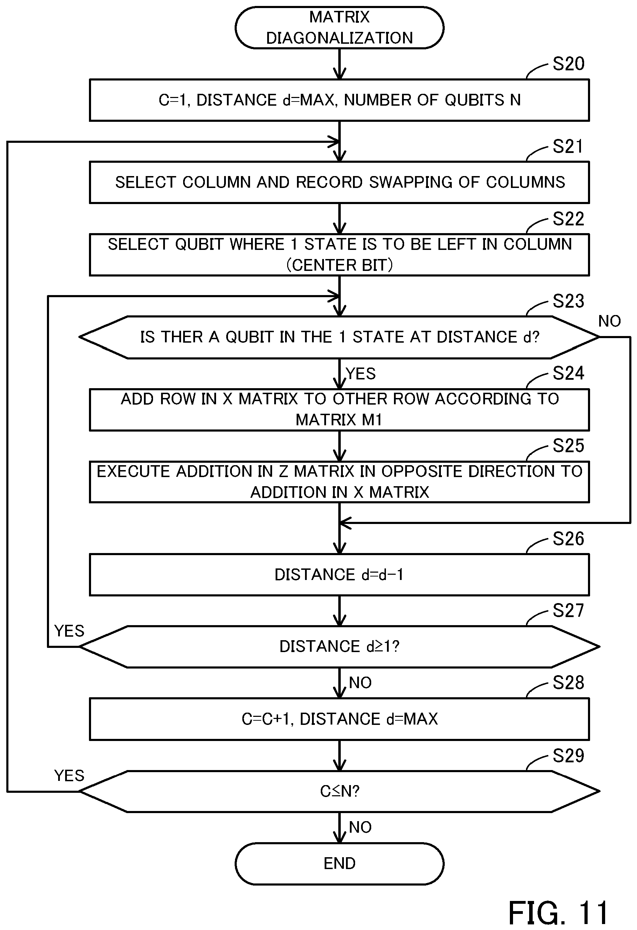

FIG. 11 is a flowchart depicting an example procedure of matrix diagonalization.

(S20) The quantum circuit generation unit 124 initializes the column number C to 1, initializes the distance d to the maximum distance in the quantum device 30, and specifies the number N of qubits. The column number C indicates which column out of the N columns is currently being processed.

(S21) The quantum circuit generation unit 124 selects one unprocessed column out of the N columns included in the stabilizer matrix. When doing so, it is preferable for the quantum circuit generation unit 124 to select a column in which a row where 1 is to be left by the present processing is already set at 1. The quantum circuit generation unit 124 may swap the columns included in the stabilizer matrix. When doing so, the quantum circuit generation unit 124 records the order of the N Pauli character strings in keeping with the swapping of the columns.

(S22) Out of the N qubits, the quantum circuit generation unit 124 selects a qubit corresponding to the row where the 1 state is to be left (that is, a row that is to become a diagonal element) out of the selected column as the center bit. The quantum circuit generation unit 124 calculates the distance between the center bit and each of the other N-1 qubits from the connection relationships in the quantum device 30.

(S23) The quantum circuit generation unit 124 determines whether there is a qubit corresponding to the row in the 1 state at a distance d from the center bit. When there is an applicable qubit, the processing proceeds to step S24, but when there is no applicable qubit, the processing proceeds to step S26.

(S24) The quantum circuit generation unit 124 performs a row operation that adds a row in the X matrix to another row in the X matrix in accordance with a matrix M₁ defined by Math (6), (7), and (8). This row operation is defined by the CNOT gates in Math (6), (7), and (8). Math (6) represents a chain of CNOT gates from the qubit at the distance d toward the center bit. In Math (6), (7), and (8), CNOT_{i>j} represents a CNOT gate in which a qubit located at a distance i from the center bit is the control bit and a qubit located at a distance j is the target bit.

When the row (i-1) has been diagonalized, c₁ is a CNOT gate where a qubit that is far from the center bit is the control bit and a qubit near the center bit is the target bit. When the qubit q(i-1) is 0, c₂ is a CNOT gate where a qubit far from the center bit is the control bit and a qubit near the center bit is the target bit.

(S25) The quantum circuit generation unit 124 executes, on the Z matrix, a row operation in the opposite direction to the row operation on the X matrix in step S24. A row operation that adds row #i of the X matrix to row #j corresponds to a row operation that adds row #j of the Z matrix to row #i.

(S26) The quantum circuit generation unit 124 updates the distance d to d-1.

(S27) The quantum circuit generation unit 124 determines whether the distance d is 1 or higher. When the distance d is 1 or higher, the processing returns to step S23, otherwise the processing proceeds to step S28.

(S28) The quantum circuit generation unit 124 updates the column number C to C+1. The distance d is initialized to the maximum distance in the quantum device 30.

(S29) The quantum circuit generation unit 124 determines whether the column number C is equal to or less than the number N of qubits. When the column number C is equal to or less than the number of qubits N, the processing returns to step S21, otherwise the matrix diagonalization in step S13 ends.
[Math (6)] ${M}_{1} = {CNOT}_{0 > 1} M = {CNOT}_{0 > 1} {\prod }_{i = 2}^{d} \left({c}_{1} {CNOT}_{i - 1 > i}{c}_{2}\right)$
[Math (7)] ${c}_{1} = \left\{\begin{matrix}{CNOT}_{i > i - 1} & row \left(i-1\right) is diagonal \\ 1 & else\end{matrix}\right.$
[Math (8)] ${c}_{2} = \left\{\begin{matrix}{CNOT}_{i > i - 1} & q \left(i-1\right) = 0 \\ 1 & else\end{matrix}\right.$

The procedure for diagonalizing the X matrix in FIG. 8 will now be described further. When C=1, the quantum circuit generation unit 124 selects the qubit q₀ as the center bit. At this time, the state of qubit q₀ is 1, and the states of the qubits q₁, q₂, and q₃ are 0. This means that there is no qubit in the 1 state at a distance d=2 from the center bit, and there is no qubit in the 1 state at a distance d=1. For this reason, no row operations are performed.

Next, when C=2, the quantum circuit generation unit 124 selects the qubit q₁ as the center bit. At this time, the states of the qubits q₀, q₁, and q₃ are 1, and the state of the qubit q₂ is 0. For this reason, the qubit q₃ located at a distance d=2 from the center bit is the target of processing. At this time, since the qubit q(1)=1 and row (1) has been diagonalized, CNOT_{1>2}, CNOT_{2>1}, and CNOT_{1>0} are executed. For this reason, a CNOT gate from the qubit q₀ to the qubit q₃, a CNOT gate from the qubit q₃ to the qubit q₀, and a CNOT gate from the qubit q₁ to the qubit q₀ are executed.

After the CNOT gates described above, the state of the qubit q₁ is 1, and the states of the qubits q₀, q₂, and q₃ are 0. For this reason, there are no qubits in the 1 state at distance d=1 from the center bit, and no further row operations are performed.

Next, the quantum circuit generation unit 124 selects the qubit q₂ as the center bit when C=3. At this time, the state of the qubits q₀ and q₂ is 1, and the state of the qubits q₁ and q₃ is 0. For this reason, the qubit q₀ located at a distance d=2 from the center bit is the target of processing. Here, CNOT_{0>1}, CNOT_{1>2}, and CNOT_{2>1} are executed. Accordingly, a CNOT gate from the qubit q₂ to the qubit q₁, a CNOT gate from the qubit q₁ to the qubit q₀, and a CNOT gate from the qubit q₀ to the qubit q₁ are executed.

After the CNOT gates described above, the state of the qubits q₁ and q₂ is 1, and the state of the qubits q₀ and q₃ is 0. Accordingly, the qubit q₁ located at a distance d=1 from the center bit is the target of processing. Here, CNOT_{0>1} is executed. For this reason, a CNOT gate from the qubit q₂ to the qubit q₁ is executed.

Next, when C=4, the quantum circuit generation unit 124 selects the qubit q₁ as the center bit. At this time, the state of the qubits q₀ and q₁ is 1, and the state of the qubits q₂ and q₃ is 0. Although there is no qubit in the 1 state at a distance d=2 from the center bit, there is a qubit q₀ in the 1 state at a distance d=1 from the center bit. Accordingly, the qubit q₀ is the target of processing. Here, CNOT_{0>1} is executed. Accordingly, a CNOT gate from the qubit q₁ to the qubit q₀ is executed. Through the above processing, the diagonalization of the X matrix is complete.

As described above, the information processing apparatus 100 according to the second embodiment generates a quantum circuit for observing a plurality of measurement values in parallel from a quantum state based on a plurality of Pauli strings. By doing so, the information processing apparatus 100 supports the design of a quantum circuit, and the burden of designing quantum circuits is reduced. The information processing apparatus 100 generates a stabilizer matrix from a plurality of Pauli character strings and determines the quantum gates of a quantum circuit by diagonalizing the stabilizer matrix. By doing so, the information processing apparatus 100 is able to generate quantum circuits using a uniform method for a variety of Pauli character strings, and is able to generate a quantum circuit at high speed.

Furthermore, the information processing apparatus 100 is able to optimize the quantum circuit through optimization of the diagonalization process on the stabilizer matrix. This generates a highly efficient quantum circuit with few quantum gates. In addition, during diagonalization of the stabilizer matrix, the information processing apparatus 100 selects two rows to perform a row operation according to the constraints on the connection relationships between qubits. By doing so, the generation of a quantum circuit is speeded up compared to a case where the determination of quantum gates that match the Pauli strings and the modification of a quantum circuit to satisfy the constraints on the connection relationships are performed separately. A highly efficient quantum circuit with few quantum gates is generated. As a result, the execution time of gate operations according to a quantum circuit is reduced. Quantum computation is completed within the duration of the qubit, even when there are many qubits. In addition, by reducing the number of quantum gates, the probability of errors occurring also falls.

### Reference Signs List

- 10: Information processing apparatus
- 11: Storage unit
- 12: Processing unit
- 13: Operator information
- 14: Layout information
- 15: Matrix
- 16: Diagonal matrix
- 17: Quantum circuit

## Claims

1. An information processing apparatus (10) comprising:
a storage unit (11) that stores operator information, which indicates a plurality of projection operators, each of which is indicated by a combination of a plurality of Pauli operators, and physical layout information, which indicates connection relationships between a plurality of qubits included in a quantum device; and
a processing unit (12) that
generates a stabilizer matrix including a plurality of rows corresponding to the plurality of qubits and a plurality of columns corresponding to the plurality of projection operators based on the plurality of projection operators indicated by the operator information,
executes diagonalization that converts the matrix into a diagonal matrix through performing a plurality of row operations according to a Gaussian elimination procedure, each of the plurality of row operations selecting two rows out of the plurality of rows corresponding to two qubits interconnected in the quantum device out of the plurality of qubits, based on the connection relationships indicated by the physical layout information, and adding one of the two rows to the other row to delete a non-zero element other than an element to be used as a diagonal element, and
generates a quantum circuit (17) indicating gate operations for the quantum device corresponding to the plurality of row operations performed during the diagonalization,
wherein the diagonalization is performed iteratively for each column by:
selecting a center bit corresponding to a diagonal element in the column;
calculating a distance between the center bit and each of other qubits based on the physical layout information, the distance being the number of connections passed from one qubit to another qubit; and
performing addition operations so that the diagonal element remains and other elements in the column become zero, in an order starting from a row corresponding to a qubit with the largest distance and moving toward the center bit.

2. The information processing apparatus (10) according to claim 1,
wherein the plurality of qubits include a first qubit, a second qubit that is connected to the first qubit, and a third qubit that is connected to the second qubit but is not connected to the first qubit, and
the diagonalization deletes, when a first row corresponding to the first qubit and a third row corresponding to the third qubit out of the plurality of rows include non-zero elements in the same column, non-zero elements in the third row by performing a first row operation on the first row and a second row corresponding to the second qubit and a second row operation on the second row and the third row, each of the first row operation and the second row operation being one of the plurality of row operations.

3. A quantum circuit generation method executed by a computer, the quantum circuit generation method comprising:
generating, based on a plurality of projection operators, each of which is indicated by a combination of a plurality of Pauli operators, a stabilizer matrix including a plurality of rows corresponding to a plurality of qubits included in a quantum device and a plurality of columns corresponding to the plurality of projection operators;
executing diagonalization that converts the matrix into a diagonal matrix through performing a plurality of row operations according to a Gaussian elimination procedure, each of the plurality of row operations selecting two rows out of the plurality of rows corresponding to two qubits interconnected in the quantum device out of the plurality of qubits, based on connection relationships between the plurality of qubits in the quantum device according to physical layout information, and adding one of the two rows to the other row to delete a non-zero element other than an element to be used as a diagonal element; and
generating a quantum circuit (17) indicating gate operations for the quantum device corresponding to the plurality of row operations performed during the diagonalization,
wherein the diagonalization is performed iteratively for each column by:
selecting a center bit corresponding to a diagonal element in the column;
calculating a distance between the center bit and each of other qubits based on the physical layout information, the distance being the number of connections passed from one qubit to another qubit; and
performing addition operations so that the diagonal element remains and other elements in the column become zero, in an order starting from a row corresponding to a qubit with the largest distance and moving toward the center bit.

4. A quantum circuit generation program comprising instructions which, when the quantum circuit generation program is executed by a computer, cause the computer to execute a process comprising:
generating, based on a plurality of projection operators, each of which is indicated by a combination of a plurality of Pauli operators, a stabilizer matrix including a plurality of rows corresponding to a plurality of qubits included in a quantum device and a plurality of columns corresponding to the plurality of projection operators;
executing diagonalization that converts the matrix into a diagonal matrix through performing a plurality of row operations according to a Gaussian elimination procedure, each of the plurality of row operations selecting two rows out of the plurality of rows corresponding to two qubits interconnected in the quantum device out of the plurality of qubits, based on connection relationships between the plurality of qubits in the quantum device according to physical layout information, and adding one of the two rows to the other row to delete a non-zero element other than an element to be used as a diagonal element; and
generating a quantum circuit (17) indicating gate operations for the quantum device corresponding to the plurality of row operations performed during the diagonalization,
wherein the diagonalization is performed iteratively for each column by:
selecting a center bit corresponding to a diagonal element in the column;
calculating a distance between the center bit and each of other qubits based on the physical layout information, the distance being the number of connections passed from one qubit to another qubit; and
performing addition operations so that the diagonal element remains and other elements in the column become zero, in an order starting from a row corresponding to a qubit with the largest distance and moving toward the center bit.

## Patentansprüche

1. Informationsverarbeitungsvorrichtung (10), umfassend:
eine Speichereinheit (11), die Operatorinformationen speichert, die eine Vielzahl von Projektionsoperatoren angeben, von denen jeder durch eine Kombination einer Vielzahl von Pauli-Operatoren angegeben wird, sowie physikalische Layoutinformationen, die Verbindungsbeziehungen zwischen einer Vielzahl von in einer Quantenvorrichtung enthaltenen Qubits angeben; und
eine Verarbeitungseinheit (12), die
auf der Grundlage der Vielzahl von Projektionsoperatoren, die durch die Operatorinformationen angegeben werden, eine Stabilisatormatrix erzeugt, die eine Vielzahl von Zeilen, die der Vielzahl von Qubits entsprechen, und eine Vielzahl von Spalten umfasst, die der Vielzahl von Projektionsoperatoren entsprechen,
eine Diagonalisierung ausführt, die die Matrix durch Durchführen einer Vielzahl von Zeilenoperationen gemäß einem Gaußschen Eliminationsverfahren in eine Diagonalmatrix umwandelt, wobei jede der Vielzahl von Zeilenoperationen auf der Grundlage der durch die physikalischen Layoutinformationen angegebenen Verbindungsbeziehungen zwei Zeilen aus der Vielzahl von Zeilen auswählt, die zwei in der Quantenvorrichtung miteinander verbundenen Qubits aus der Vielzahl von Qubits entsprechen, und eine der beiden Zeilen zu der anderen Zeile addiert, um ein von Null verschiedenes Element zu löschen, das nicht als Diagonalelement verwendet werden soll, und
und eine Quantenschaltung (17) erzeugt, die Gatteroperationen für die Quantenvorrichtung angibt, die der Vielzahl von während der Diagonalisierung durchgeführten Zeilenoperationen entsprechen,
wobei die Diagonalisierung iterativ für jede Spalte durchgeführt wird durch:
Auswahl eines mittleren Bits, das einem Diagonalelement in der Spalte entspricht;
Berechnung eines Abstands zwischen dem mittleren Bit und jedem der anderen Qubits auf der Grundlage der physikalischen Layoutinformationen, wobei der Abstand der Anzahl der Verbindungen entspricht, die von einem Qubit zu einem anderen Qubit durchlaufen werden; und
Durchführung von Additionsoperationen, so dass das Diagonalelement erhalten bleibt und die anderen Elemente in der Spalte zu Null werden, in einer Reihenfolge, die bei einer Zeile beginnt, die einem Qubit mit dem größten Abstand entspricht, und sich in Richtung des mittleren Bits bewegt.

2. Informationsverarbeitungsvorrichtung (10) nach Anspruch 1,
wobei die Vielzahl von Qubits ein erstes Qubit, ein zweites Qubit, das mit dem ersten Qubit verbunden ist, und ein drittes Qubit, das mit dem zweiten Qubit verbunden ist, aber nicht mit dem ersten Qubit verbunden ist, umfasst, und
die Diagonalisierung löscht, wenn eine erste Zeile, die dem ersten Qubit entspricht, und eine dritte Zeile, die dem dritten Qubit entspricht, aus der Vielzahl von Zeilen von Null verschiedene Elemente in derselben Spalte enthalten, von Null verschiedene Elemente in der dritten Zeile, indem eine erste Zeilenoperation an der ersten Zeile und einer zweiten Zeile, die dem zweiten Qubit entspricht, und eine zweite Zeilenoperation an der zweiten Zeile und der dritten Zeile durchgeführt werden, wobei die erste Zeilenoperation und die zweite Zeilenoperation jeweils eine der Vielzahl von Zeilenoperationen sind.

3. Quantenschaltungserzeugungsverfahren, das durch einen Computer ausgeführt wird, wobei das Quantenschaltungserzeugungsverfahren Folgendes umfasst:
Erzeugen einer Stabilisatormatrix auf der Grundlage einer Vielzahl von Projektionsoperatoren, von denen jeder durch eine Kombination einer Vielzahl von Pauli-Operatoren angegeben wird, wobei die Stabilisatormatrix eine Vielzahl von Zeilen, die einer Vielzahl von in einer Quantenvorrichtung enthaltenen Qubits entsprechen, und eine Vielzahl von Spalten umfasst, die der Vielzahl von Projektionsoperatoren entsprechen;
Ausführen einer Diagonalisierung, die die Matrix durch Durchführen einer Vielzahl von Zeilenoperationen gemäß einem Gaußschen Eliminationsverfahren in eine Diagonalmatrix umwandelt, wobei jede der Vielzahl von Zeilenoperationen auf der Grundlage von Verbindungsbeziehungen zwischen der Vielzahl von Qubits in der Quantenvorrichtung gemäß den physikalischen Layoutinformationen zwei Zeilen aus der Vielzahl von Zeilen auswählt, die zwei in der Quantenvorrichtung miteinander verbundenen Qubits aus der Vielzahl von Qubits entsprechen, und eine der beiden Zeilen zu der anderen Zeile addiert, um ein von Null verschiedenes Element zu löschen, das nicht als Diagonalelement verwendet werden soll; und
Erzeugen einer Quantenschaltung (17), die Gatteroperationen für die Quantenvorrichtung angibt, die der Vielzahl von während der Diagonalisierung durchgeführten Zeilenoperationen entsprechen,
wobei die Diagonalisierung iterativ für jede Spalte durchgeführt wird durch:
Auswahl eines mittleren Bits, das einem Diagonalelement in der Spalte entspricht;
Berechnung eines Abstands zwischen dem mittleren Bit und jedem der anderen Qubits auf der Grundlage der physikalischen Layoutinformationen, wobei der Abstand der Anzahl der Verbindungen entspricht, die von einem Qubit zu einem anderen Qubit durchlaufen werden; und
Durchführung von Additionsoperationen, so dass das Diagonalelement erhalten bleibt und die anderen Elemente in der Spalte zu Null werden, in einer Reihenfolge, die bei einer Zeile beginnt, die einem Qubit mit dem größten Abstand entspricht, und sich in Richtung des mittleren Bits bewegt.

4. Quantenschaltungserzeugungsprogramm, umfassend Anweisungen, die bei Ausführung des Quantenschaltungserzeugungsprogramms durch einen Computer den Computer veranlassen, einen Prozess auszuführen, der Folgendes umfasst:
Erzeugen einer Stabilisatormatrix auf der Grundlage einer Vielzahl von Projektionsoperatoren, von denen jeder durch eine Kombination einer Vielzahl von Pauli-Operatoren angegeben wird, wobei die Stabilisatormatrix eine Vielzahl von Zeilen, die einer Vielzahl von in einer Quantenvorrichtung enthaltenen Qubits entsprechen, und eine Vielzahl von Spalten umfasst, die der Vielzahl von Projektionsoperatoren entsprechen;
Ausführen einer Diagonalisierung, die die Matrix durch Durchführen einer Vielzahl von Zeilenoperationen gemäß einem Gaußschen Eliminationsverfahren in eine Diagonalmatrix umwandelt, wobei jede der Vielzahl von Zeilenoperationen auf der Grundlage von Verbindungsbeziehungen zwischen der Vielzahl von Qubits in der Quantenvorrichtung gemäß den physikalischen Layoutinformationen zwei Zeilen aus der Vielzahl von Zeilen auswählt, die zwei in der Quantenvorrichtung miteinander verbundenen Qubits aus der Vielzahl von Qubits entsprechen, und eine der beiden Zeilen zu der anderen Zeile addiert, um ein von Null verschiedenes Element zu löschen, das nicht als Diagonalelement verwendet werden soll; und
Erzeugen einer Quantenschaltung (17), die Gatteroperationen für die Quantenvorrichtung angibt, die der Vielzahl von während der Diagonalisierung durchgeführten Zeilenoperationen entsprechen,
wobei die Diagonalisierung iterativ für jede Spalte durchgeführt wird durch:
Auswahl eines mittleren Bits, das einem Diagonalelement in der Spalte entspricht;
Berechnung eines Abstands zwischen dem mittleren Bit und jedem der anderen Qubits auf der Grundlage der physikalischen Layoutinformationen, wobei der Abstand der Anzahl der Verbindungen entspricht, die von einem Qubit zu einem anderen Qubit durchlaufen werden; und
Durchführung von Additionsoperationen, so dass das Diagonalelement erhalten bleibt und die anderen Elemente in der Spalte zu Null werden, in einer Reihenfolge, die bei einer Zeile beginnt, die einem Qubit mit dem größten Abstand entspricht, und sich in Richtung des mittleren Bits bewegt.

## Revendications

1. Appareil de traitement d'informations (10) comprenant :
une unité de stockage (11) qui stocke des informations d'opérateur, lesquelles indiquent une pluralité d'opérateurs de projection, chacun étant indiqué par une combinaison d'une pluralité d'opérateurs de Pauli, et des informations sur la disposition physique, lesquelles indiquent des relations de connexion entre une pluralité de qubits inclus dans un dispositif quantique ; et
une unité de traitement (12) qui
génère une matrice stabilisatrice comportant une pluralité de lignes correspondant à la pluralité de qubits et une pluralité de colonnes correspondant à la pluralité d'opérateurs de projection, sur la base de la pluralité d'opérateurs de projection indiqués par les informations d'opérateur,
exécute une diagonalisation qui convertit la matrice en une matrice diagonale en réalisant une pluralité d'opérations de ligne selon une procédure d'élimination de Gauss, chacune de la pluralité d'opérations de ligne sélectionnant deux lignes parmi la pluralité de lignes correspondant à deux qubits interconnectés dans le dispositif quantique parmi la pluralité de qubits, sur la base des relations de connexion indiquées par les informations de disposition physique, et en ajoutant l'une des deux lignes à l'autre ligne pour supprimer un élément non nul autre qu'un élément à utiliser comme élément diagonal, et
génère un circuit quantique (17) indiquant les opérations de porte pour le dispositif quantique correspondant à la pluralité d'opérations de ligne réalisées lors de la diagonalisation,
dans lequel la diagonalisation est réalisée de manière itérative pour chaque colonne par :
la sélection d'un bit central correspondant à un élément diagonal de la colonne ;
le calcul de la distance entre le bit central et chacun des autres qubits sur la base des informations de disposition physique, la distance étant le nombre de connexions traversées d'un premier qubit à un autre qubit ; et
la réalisation d'opérations d'addition de sorte que l'élément diagonal reste et que les autres éléments de la colonne deviennent nuls, dans un ordre commençant par une ligne correspondant à un qubit avec la plus grande distance et se déplaçant vers le bit central.

2. Appareil de traitement d'informations (10) selon la revendication 1,
dans lequel la pluralité de qubits comporte un premier qubit, un deuxième qubit connecté au premier qubit, et un troisième qubit connecté au deuxième qubit mais non connecté au premier qubit, et
la diagonalisation supprime, lorsque la première ligne correspondant au premier qubit et la troisième ligne correspondant au troisième qubit, parmi la pluralité de lignes, comportent des éléments non nuls dans la même colonne, les éléments non nuls de la troisième ligne en réalisant une première opération de ligne sur la première ligne et une deuxième ligne correspondant au deuxième qubit, et une seconde opération de ligne sur la deuxième ligne et la troisième ligne, chacune de la première opération de ligne et de la seconde opération de ligne étant l'une de la pluralité d'opérations de ligne.

3. Procédé de génération de circuits quantiques exécuté par ordinateur, le procédé de génération de circuits quantiques comprenant :
la génération, sur la base d'une pluralité d'opérateurs de projection, chacun étant indiqué par une combinaison d'une pluralité d'opérateurs de Pauli, d'une matrice stabilisatrice comportant une pluralité de lignes correspondant à une pluralité de qubits inclus dans un dispositif quantique et une pluralité de colonnes correspondant à la pluralité d'opérateurs de projection ;
l'exécution d'une diagonalisation qui convertit la matrice en une matrice diagonale en réalisant une pluralité d'opérations de ligne selon une procédure d'élimination de Gauss, chacune de la pluralité d'opérations de ligne sélectionnant deux lignes parmi la pluralité de lignes correspondant à deux qubits interconnectés dans le dispositif quantique parmi la pluralité de qubits, sur la base de relations de connexion entre la pluralité de qubits dans le dispositif quantique selon des informations de disposition physique, et en ajoutant l'une des deux lignes à l'autre ligne pour supprimer un élément non nul autre qu'un élément à utiliser comme élément diagonal ; et
la génération d'un circuit quantique (17) indiquant les opérations de porte pour le dispositif quantique correspondant à la pluralité d'opérations de ligne réalisées lors de la diagonalisation,
dans lequel la diagonalisation est réalisée de manière itérative pour chaque colonne par :
la sélection d'un bit central correspondant à un élément diagonal de la colonne ;
le calcul de la distance entre le bit central et chacun des autres qubits sur la base des informations de disposition physique, la distance étant le nombre de connexions traversées d'un premier qubit à un autre qubit ; et
la réalisation d'opérations d'addition de sorte que l'élément diagonal reste et que les autres éléments de la colonne deviennent nuls, dans un ordre commençant par une ligne correspondant à un qubit avec la plus grande distance et se déplaçant vers le bit central.

4. Programme de génération de circuits quantiques comprenant des instructions qui, lorsque le programme de génération de circuits quantiques est exécuté par un ordinateur, amènent l'ordinateur à exécuter un processus comprenant :
la génération, sur la base d'une pluralité d'opérateurs de projection, chacun étant indiqué par une combinaison d'une pluralité d'opérateurs de Pauli, d'une matrice stabilisatrice comportant une pluralité de lignes correspondant à une pluralité de qubits inclus dans un dispositif quantique et une pluralité de colonnes correspondant à la pluralité d'opérateurs de projection ;
l'exécution d'une diagonalisation qui convertit la matrice en une matrice diagonale en réalisant une pluralité d'opérations de ligne selon une procédure d'élimination de Gauss, chacune de la pluralité d'opérations de ligne sélectionnant deux lignes parmi la pluralité de lignes correspondant à deux qubits interconnectés dans le dispositif quantique parmi la pluralité de qubits, sur la base de relations de connexion entre la pluralité de qubits dans le dispositif quantique selon des informations de disposition physique, et en ajoutant l'une des deux lignes à l'autre ligne pour supprimer un élément non nul autre qu'un élément à utiliser comme élément diagonal ; et
la génération d'un circuit quantique (17) indiquant les opérations de porte pour le dispositif quantique correspondant à la pluralité d'opérations de ligne réalisées lors de la diagonalisation,
dans lequel la diagonalisation est réalisée de manière itérative pour chaque colonne par :
la sélection d'un bit central correspondant à un élément diagonal de la colonne ;
le calcul de la distance entre le bit central et chacun des autres qubits sur la base des informations de disposition physique, la distance étant le nombre de connexions traversées d'un premier qubit à un autre qubit ; et
la réalisation d'opérations d'addition de sorte que l'élément diagonal reste et que les autres éléments de la colonne deviennent nuls, dans un ordre commençant par une ligne correspondant à un qubit avec la plus grande distance et se déplaçant vers le bit central.
